# EUROPÄISCHE PATENTANMELDUNG

(11) **EP 4 166 220 A1**
(43) Veröffentlichungstag der Anmeldung: **19.04.2023**
(21) Anmeldenummer: 21020509.2
(22) Anmeldetag: 12.10.2021
(51) Int. Cl.: B01D 53/56, B01D 53/75, B01D 53/76, B01D 53/78

(54) **VERFAHREN UND ANORDNUNG ZUR REDUZIERUNG DES GEHALTS VON STICKSTOFFOXIDEN IN EINEM RAUCHGASSTROM**

(71) Anmelder: Linde GmbH, 82049 Pullach (DE); Martin GmbH für Umwelt- und Energietechnik, 80807 München (DE)
(72) Erfinder: Obermeyer, Heinz-Dieter, 82049 Pullach (DE); Kaltenegger, Johann, 82049 Pullach (DE); Jell, Sebastian, 80807 München (DE); Martin, Ulrich, 80807 München (DE)
(74) Vertreter: Gellner, Bernd

(57) **Zusammenfassung**

Die Erfindung betrifft ein Verfahren (100) zur Reduzierung des Gehalts von Stickstoffoxiden in einem Rauchgasstrom (1), bei dem der Rauchgasstrom (1) einer Stickstoffoxide erzeugenden Rauchgasquelle (10) entnommen und durch eine zur selektiven nichtkatalytischen Reduktion eingerichteten Nachbehandlungseinheit (20) sowie daran anschließend durch eine Wasch-, Absorptions- oder Adsorptionseinheit (40) geführt wird. Es ist vorgesehen, dass stromab der Nachbehandlungseinheit (20) und stromauf der Wasch-, Absorptions- oder Adsorptionseinheit (40) eine Ozoneindüsung (30) in den Rauchgasstrom (1) vorgenommen wird. Eine entsprechende Anlage ist ebenfalls Gegenstand der vorliegenden Erfindung.

## Beschreibung

Die Erfindung betrifft ein Verfahren und eine Anordnung zur Reduzierung des Gehalts von Stickstoffoxiden in einem Rauchgasstrom.

### Hintergrund

Bewährte Sekundärmaßnahmen zur Reduzierung von Stickstoffoxiden in Rauchgas sind die selektive nichtkatalytische Reduktion (SNCR) und die selektive katalytische Reduktion (SCR). Es ist auch bekannt, dass Ozon Stickstoffoxide in Rauchgasströmen wirksam oxidieren kann. Dies wurde in industriellen Anwendungen, insbesondere in Raffinerien, ausgenutzt. Beim Einsatz von Ozon können dabei die gleichen oder sogar niedrigere Emissionen als bei der SCR und der SNCR erreicht werden.

Der technische Hintergrund der Erfindung bzw. der Stand der Technik ist auch bei J. Kuropka, "Removal of Nitrogen Oxides from Flue gases in a Packed Column," Environment Protection Engineering, vol. 37, no. 1, pp. 13-22, 2011, und einer Veröffentlichung des Umweltbundesamts von M. Beckmann, "Beschreibung unterschiedlicher Techniken und deren Entwicklungspotentiale zur Minderung von Stickstoffoxiden im Abgas von Abfallverbrennungsanlagen", Texte 71/2011, 2011, beschrieben.

Die vorliegende Erfindung stellt sich die Aufgabe, entsprechende Sekundärmaßnahmen zur Reduzierung von Stickstoffoxiden im Rauchgas zu verbessern und die auch unten weiter diskutierten Nachteile zu überwinden.

### Offenbarung der Erfindung

Vor diesem Hintergrund werden ein Verfahren und eine Anordnung zur Reduzierung des Gehalts von Stickstoffoxiden in Rauchgas mit den Merkmalen der unabhängigen Ansprüche vorgeschlagen. Ausgestaltungen sind Gegenstand der abhängigen Ansprüche und der nachfolgenden Beschreibung.

Die Erfindung schlägt ein Verfahren zur Reduzierung des Gehalts von Stickstoffoxiden in einem Rauchgasstrom vor, bei dem der Rauchgasstrom einer Stickstoffoxide erzeugenden Rauchgasquelle entnommen und durch eine zur selektiven nichtkatalytischen Reduktion eingerichteten Nachbehandlungseinheit sowie daran anschließend durch eine Wasch-, Absorptions- oder Adsorptionseinheit geführt wird. Erfindungsgemäß ist vorgesehen, dass stromab der Nachbehandlungseinheit und stromauf der Wasch-, Absorptions- oder Adsorptionseinheit eine Ozoneindüsung in den Rauchgasstrom vorgenommen wird.

Die Reduktionsreaktion für die SNCR bzw. die SCR, z.B. mit Ammoniak als Reduktionsmittel, läuft gemäß folgender Gleichung ab:

6 NO + 4 NH₃ → 5 N₂ + 6 H₂O

Beim Einsatz von Ozon kann dieses vor einer Wäschereinheit in den Rauchgasstrom injiziert werden. Die Stickstoffoxide Stickstoffmonoxid und Stickstoffdioxid werden durch die folgenden Reaktionen selektiv zu Distickstoffpentoxid, einer ausgesprochen wasserlöslichen Spezies, oxidiert:

NO + O₃ → NO₂ + O₂ (g)

2 NO₂ + O₃ → N₂O₅ + O₂ (g)

N₂O₅ + H₂O → 2 HNO₃ (I)

HNO₃ + NaOH → NaNO₃ + H₂O (I)

Die SNCR ist die kostengünstigste sekundäre Maßnahme. Sie wird im Temperaturbereich zwischen 700 und 1200 °C betrieben, ihre Fähigkeit zur Reduzierung von Stickoxiden ist jedoch begrenzt und es besteht der Nachteil, dass der Schlupf von Ammoniak bei niedrigeren Stickoxidgrenzwerten zunimmt. Ammoniak selbst ist ein klimarelevantes Gas und unterliegt ebenfalls strengen Emissionsgrenzwerten.

Bei der SCR besteht ein sehr hoher Investitionsbedarf. Sie wird im Temperaturbereich zwischen 200 und 400 °C betrieben. Das Rauchgas muss daher oft auf diese Temperaturen aufgeheizt werden, was die Betriebskosten erhöht und die Effizienz der Anlage verringert.

Die Reduzierung von Stickstoffoxiden mit Ozon kann bei niedrigen Temperaturen zwischen 50 °C und 200 °C erfolgen. Sie erscheint daher besonders attraktiv. Mit Ozon wurden Stickstoffoxidwerte unter 20 mg/m³ erreicht.

Auf der Grundlage der oben angegebenen chemischen Gleichungen ist ein Molverhältnis von 1,5 Ozon zu Stickstoffmonoxid erforderlich, wobei das gesamte Stickstoffmonoxid zunächst in Stickstoffdioxid und dann in Distickstoffpentoxid umgewandelt wird. Bei industriellen Anwendungen sind Molverhältnisse von mehr als 1,5 und manchmal sogar von mehr als 2 erforderlich, da sich Ozon zersetzt oder von anderen im Rauchgas vorhandenen Stoffen verbraucht wird.

Die Produktion von Ozon erfordert Sauerstoff und Energie. Die Erzeugung großer Mengen Ozon verursacht also hohe Betriebskosten.

Obwohl die Injektion von Ozon in das Rauchgas die geringstmöglichen Stickstoffoxidemissionen liefern kann, ist für die Erzeugung von Ozon mit einem Ozongenerator eine erhebliche Energiemenge erforderlich. Dies bedeutet, dass die Betriebskosten höher sein können als bei alternativen Technologien wie SCR und SNCR. Die vorgeschlagene Erfindung senkt die Betriebskosten, indem sie die Ozonmenge, die zur Senkung der Stickstoffoxidemissionen auf einen bestimmten Grenzwert erforderlich ist, erheblich reduziert.

Ozon wird in der Industrie nur in einer begrenzten Anzahl von Anwendungen zur Senkung der Stickstoffoxidemissionen eingesetzt, wobei die meisten Anwendungen in Raffinerien erfolgen. Im Vergleich zu alternativen Technologien wie SCR und SNCR in Verbrennungsanlagen, Abfallbehandlungsanlagen oder Öfen war Ozon bisher nicht durchweg wettbewerbsfähig. Doch strenge Grenzwerte für Stickstoffoxidemissionen und Ammoniak sprechen für diese Technologie, da mit ihr die niedrigsten Stickstoffoxidwerte erreicht werden können.

Insbesondere SNCR-Anlagen könnten es in Zukunft schwer haben, die geforderten Grenzwerte für Stickstoffoxide zu erfüllen und gleichzeitig den Ammoniakschlupf zu reduzieren. Die Betreiber müssen in eine alternative Technologie investieren, um die geforderten Grenzwerte zu erreichen.

Die Kombination aus SNCR und Ozoneindüsung ist in der Lage, die gesetzlichen Stickstoffoxidemissionsgrenzwerte zu erreichen und bietet wirtschaftliche Vorteile gegenüber der SCR. Darüber hinaus ist die Nachrüstung bestehender SNCR-Systeme möglich, da die Ozoneinspritzung eine Nachrüsttechnologie ist.

Gemäß einer Ausgestaltung der Erfindung weist die Wasch-, Absorptions- oder Adsorptionseinheit einen Trocken-, Halbtrocken- oder Nasswäscher, einen ionisierenden Nasswäscher, einen Sprühabsorber oder einen Adsorber auf oder ist als solcher ausgebildet. Eine entsprechende Wasch-, Absorptions- oder Adsorptionseinheit kann beispielsweise unter Verwendung einer Wäscherlösung wie Kalk (Calciumhydroxid), Natriumhydroxid oder Kaliumhydroxid eine Wäsche vornehmen. In weiteren Ausgestaltungen der Erfindung, die weiter unten erläutert werden, kann dabei in einer entsprechenden Wasch-, Absorptions- oder Adsorptionseinheit insbesondere Natriumnitrit gebildet werden.

Gemäß einer Ausgestaltung der Erfindung wird der Gehalt der Stickstoffoxide in der SNCR, d.h. der Nachbehandlungseinheit, auf 60 mg/m³ bis 250 mg/m³ reduziert, wobei vorteilhafterweise ein ausgesprochen geringer Ammoniakschlupf sichergestellt wird, so dass ein Ammoniakgehalt stromab der Nachbehandlungseinheit insbesondere nicht mehr als 10 mg/m³ beträgt.

Gemäß einer Ausgestaltung der Erfindung wird der Gehalt der Stickstoffoxide durch die Eindüsung von Ozon weiter auf 0 mg/m³ bis 120 mg/m³ reduziert. Ozon kann also eingesetzt werden, um die Stickstoffoxidemissionen weiter auf die erforderlichen niedrigen Grenzwerte zu reduzieren, so dass die vorgeschaltete SNCR nicht die ggf. ammoniakschlupfgefährdeten niedrigen Werte erreichen muss.

Die Vorteile der beiden Verfahren SNCR als kosteneffizienteste Sekundärmaßnahme zur Stickstoffoxidreduzierung und Ozon als das Verfahren zur Erreichung der niedrigsten Stickstoffoxid werden also in besonderes vorteilhafter Weise kombiniert.

Gemäß einer Ausgestaltung der Erfindung wird in der Nachbehandlungseinheit oder stromauf der Nachbehandlungseinheit und stromab der Rauchgasquelle bei einer Temperatur von 700 °C bis 1200 °C eine Eindüsung von Ammoniak oder Harnstoff in den Rauchgasstrom vorgenommen.

Gemäß dieser Ausgestaltung der Erfindung kann ein Teil der Stickstoffoxide, umfassend zumindest einen Teil von Stickstoffmonoxid, in der Nachbehandlungseinheit zu Stickstoff und Wasser reduziert werden.

Gemäß einer Ausgestaltung der Erfindung kann der Rauchgasstrom stromab der Nachbehandlungseinheit und stromauf der Ozoneindüsung durch wenigstens eine weitere Behandlungseinheit, ausgebildet als oder umfassend einen Abhitzekessel, geführt werden. Auf diese Weise kann eine besonders geeignete Temperatur für den Einsatz des Ozons erreicht werden.

Gemäß einer Ausgestaltung der Erfindung kann dabei der Rauchgasstrom in der wenigstens einen weiteren Behandlungseinheit auf eine Temperatur von 50 °C bis 200 °C abgekühlt werden.

Gemäß einer Ausgestaltung der Erfindung können durch die Ozoneindüsung Stickstoffoxide zu Stickstoffdioxid und weiter zu Distickstoffpentoxid umgesetzt werden, wie bereits grundsätzlich zuvor erläutert.

Gemäß einer alternativen Ausgestaltung der Erfindung kann bei der Ozoneindüsung jedoch auch eine unterstöchiometrische Menge (insbesondere eine Menge von weniger als 1,5 Ozon zu Stickstoffmonoxid) eingespeist werden, so dass Stickstoffoxide nur teilweise zu Stickstoffdioxid und das Stickstoffdioxid nicht oder nur teilweise weiter zu Distickstoffpentoxid umgesetzt wird.

Wie im Rahmen der vorliegenden Erfindung erkannt, kann insbesondere in einem der Ozoneindüsung nachgeschalteten Nasslaugenwäscher im großtechnischen Einsatz eine Sekundärreaktion auftreten, die zu einer höheren Effizienz und Kontrollierbarkeit der Stickstoffoxidemissionsminderung führt. Bei den großtechnischen Tests wurde eine Nasslaugenwaschlösung aus Natriumhydroxid verwendet. Wie aus der nachstehenden Reaktionsgleichung ersichtlich erfolgt, aufgrund bei einer nur teilweisen Oxidation von Stickstoffmonoxid zu Stickstoffdioxid dabei eine Reaktion von Stickstoffmonoxid, Stickstoffdioxid und Natriumhydroxid zu Natriumnitrit und nicht zu Natriumnitrat, wie aus dem Stand der Technik bekannt.

NO + NO₂ + NaOH → 2 NaNO₂ + H₂O

Diese Reaktion gilt auch für andere Nasswaschlösungen, in denen Hydroxidionen vorhanden sind, die Nitrit und Wasser bilden.

Gemäß dieser Ausgestaltung der Erfindung können, mit anderen Worten, in der Wasch-, Absorptions- oder Adsorptionseinheit Stickstoffmonoxid und Stickstoffdioxid zumindest zum Teil mit Hydroxidionen zu Natriumnitrit und Wasser umgesetzt werden.

Eine Anlage zur Reduzierung des Gehalts von Stickstoffoxiden in einem Rauchgasstrom, mit einer zur selektiven nichtkatalytischen Reduktion eingerichteten Nachbehandlungseinheit und einer Wasch-, Absorptions- oder Adsorptionseinheit ist ebenfalls Gegenstand der Erfindung. Die Anlage ist dafür eingerichtet, den Rauchgasstrom einer Stickstoffoxide erzeugenden Rauchgasquelle zu entnehmen und durch die zur selektiven nichtkatalytischen Reduktion eingerichtete Nachbehandlungseinheit sowie daran anschließend durch die Wasch-, Absorptions- oder Adsorptionseinheit zu führen. Erfindungsgemäß weist die Anlage Mittel zur Ozoneindüsung auf, die dafür eingerichtet sind, stromab der Nachbehandlungseinheit und stromauf der Wasch-, Absorptions- oder Adsorptionseinheit Ozon in den Rauchgasstrom einzudüsen.

Zu der erfindungsgemäß bereitgestellten Anordnung und ihren Merkmalen sei auf die obigen Erläuterungen bezüglich des erfindungsgemäßen Verfahrens und seiner Ausgestaltungen ausdrücklich verwiesen, da diese eine entsprechende Anordnung in gleicher Weise betreffen. Entsprechendes gilt insbesondere für eine Ausgestaltung einer entsprechenden Anordnung, die vorteilhafterweise zur Ausführung eines entsprechenden Verfahrens in einer beliebigen Ausgestaltung eingerichtet ist.

Wie bereits erwähnt, haben sämtliche Ausgestaltungen der vorliegenden Erfindung den Vorteil, dass deutlich weniger Ozon benötigt wird, um die gleiche Menge an Stickstoffoxiden zu reduzieren. Es kann aber auch mit der gleichen Menge Ozon eine weitere Reduktion der Emissionen an Stickstoffoxiden erzielt werden. In einigen Fällen können Stickstoffoxidemissionen nahe Null erreicht werden.

Die Erfindung wird nachfolgend unter Bezugnahme auf die beigefügte Zeichnung weiter erläutert, die eine Ausgestaltung der vorliegenden Erfindung veranschaulicht.

### Figurenbeschreibung

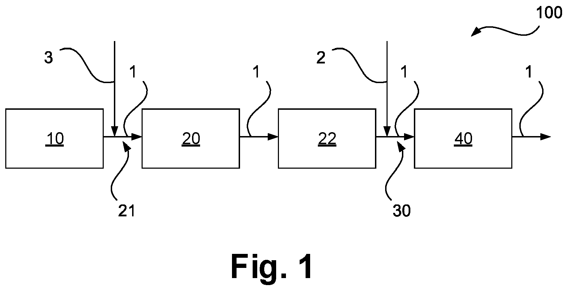

Figur 1 veranschaulicht ein Verfahren und zugleich eine Anordnung gemäß einer Ausgestaltung der vorliegenden Erfindung.

In der Figur sind ggf. einander baulich oder funktionell entsprechende Elemente mit identischen Bezugszeichen veranschaulicht und werden der Übersichtlichkeit halber nicht wiederholt erläutert. Werden nachfolgend Komponenten von Vorrichtungen erläutert, betreffen die entsprechenden Erläuterungen jeweils auch die damit durchgeführten Verfahren und umgekehrt.

Das in Figur 1 veranschaulichte Verfahren, das insgesamt mit 100 bezeichnet ist, dient zur Reduzierung des Gehalts von Stickstoffoxiden in einem Rauchgasstrom 1, der einer Stickstoffoxide erzeugenden Rauchgasquelle 10, beispielsweise einer Verbrennungsanlage, einer Abfallbehandlungsanlage oder einem Brennofen, entnommen wird.

Der durchgehend mit 1 bezeichnete Rauchgasstrom wird in der hier veranschaulichten Ausgestaltung durch eine zur selektiven nichtkatalytischen Reduktion eingerichtete Nachbehandlungseinheit 20 sowie weiter stromab durch eine Wasch-, Absorptions- oder Adsorptionseinheit 40 geführt.

In der hier veranschaulichten Ausgestaltung der Erfindung wird stromab der Nachbehandlungseinheit 20 und stromauf der Wasch-, Absorptions- oder Adsorptionseinheit 40 eine Ozoneindüsung 30 in den Rauchgasstrom 1 vorgenommen. Ein entsprechender Ozonstrom (bzw. Strom eines ozonreichen Gases) ist mit 2 angegeben.

Wie in Figur 1 dargestellt, wird der Rauchgasstrom 1 stromab der Nachbehandlungseinheit 20 und stromauf der Ozoneindüsung 30 durch wenigstens eine weitere Behandlungseinheit 22, ausgebildet als oder umfassend einen Abhitzekessel, geführt und entsprechend abgekühlt.

Wie ebenfalls in Figur 1 dargestellt, wird in der Nachbehandlungseinheit 20 oder stromauf der Nachbehandlungseinheit 20 und stromab der Rauchgasquelle 10 bei einer Temperatur wie oben erläutert eine hier mit 21 bezeichnete Eindüsung von Ammoniak oder Harnstoff in den Rauchgasstrom 1 vorgenommen wird, wobei ein Ammoniak- oder Harnstoffstrom mit 3 bezeichnet ist.

## Patentansprüche

1. Verfahren (100) zur Reduzierung des Gehalts von Stickstoffoxiden in einem Rauchgasstrom (1), bei dem der Rauchgasstrom (1) einer Stickstoffoxide erzeugenden Rauchgasquelle (10) entnommen und durch eine zur selektiven nichtkatalytischen Reduktion eingerichteten Nachbehandlungseinheit (20) sowie daran anschließend durch eine Wasch-, Absorptions- oder Adsorptionseinheit (40) geführt wird, **dadurch gekennzeichnet, dass** stromab der Nachbehandlungseinheit (20) und stromauf der Wasch-, Absorptions- oder Adsorptionseinheit (40) eine Ozoneindüsung (30) in den Rauchgasstrom (1) vorgenommen wird.

2. Verfahren (100) nach Anspruch 1, bei dem die Wascheinheit (40) einen Trocken-, Halbtrocken- oder Nasswäscher, einen ionisierenden Nasswäscher, einen Sprühabsorber oder einen Adsorber aufweist oder als solcher ausgebildet ist.

3. Verfahren (100) nach Anspruch 1 oder Anspruch 2, bei dem der Gehalt der Stickstoffoxide in der Nachbehandlungseinheit (20) auf 60 mg/m³ bis 250 mg/m³ reduziert wird und bei dem ein Ammoniakgehalt stromab der Nachbehandlungseinheit (20) nicht mehr als 10 mg/m³ beträgt.

4. Verfahren (100) nach Anspruch 3, bei dem der Gehalt der Stickstoffoxide durch die Eindüsung von Ozon weiter auf 0 mg/m³ bis 120 mg/m³ reduziert wird.

5. Verfahren (100) nach einem der vorstehenden Ansprüche, bei dem in der Nachbehandlungseinheit (20) oder stromauf der Nachbehandlungseinheit (20) und stromab der Rauchgasquelle (10) bei einer Temperatur von 700 °C bis 1200 °C eine Eindüsung (21) von Ammoniak oder Harnstoff in den Rauchgasstrom (1) vorgenommen wird.

6. Verfahren (100) nach einem der vorstehenden Ansprüche, bei dem ein Teil der Stickstoffoxide, umfassend zumindest einen Teil von Stickstoffmonoxid, in der Nachbehandlungseinheit (20) zu Stickstoff und Wasser reduziert wird.

7. Verfahren (100) nach einem der vorstehenden Ansprüche, bei dem der Rauchgasstrom (1) stromab der Nachbehandlungseinheit (20) und stromauf der Ozoneindüsung (30) durch wenigstens eine weitere Behandlungseinheit (22), ausgebildet als oder umfassend einen Abhitzekessel, geführt wird.

8. Verfahren (100) nach Anspruch 7, bei dem der Rauchgasstrom (1) in der wenigstens einen weiteren Behandlungseinheit (22) auf eine Temperatur von 50 °C bis 200 °C abgekühlt wird.

9. Verfahren (100) nach einem der vorstehenden Ansprüche, bei dem durch die Ozoneindüsung Stickstoffoxide zu Stickstoffdioxid und weiter zu Distickstoffpentoxid umgesetzt werden.

10. Verfahren (100) nach einem der Ansprüche 1 bis 8, bei dem bei der Ozoneindüsung eine unterstöchiometrische Menge Ozon eingespeist wird, so dass Stickstoffmonoxid nur teilweise zu Stickstoffdioxid und das Stickstoffdioxid nicht oder nur teilweise weiter zu Distickstoffpentoxid umgesetzt wird.

11. Verfahren (100) nach Anspruch 10, bei dem in der Wasch-, Absorptions- oder Adsorptionseinheit (40) Stickstoffmonoxid und Stickstoffdioxid zumindest zum Teil mit Hydroxidionen zu Natriumnitrit und Wasser umgesetzt werden.

12. Anlage zur Reduzierung des Gehalts von Stickstoffoxiden in einem Rauchgasstrom (1), mit einer zur selektiven nichtkatalytischen Reduktion eingerichteten Nachbehandlungseinheit (20) und einer Wasch-, Absorptions- oder Adsorptionseinheit (40), wobei die Anlage dafür eingerichtet ist, den Rauchgasstrom (1) einer Stickstoffoxide erzeugenden Rauchgasquelle (10) zu entnehmen und durch die zur selektiven nichtkatalytischen Reduktion eingerichtete Nachbehandlungseinheit (20) sowie daran anschließend durch die Wasch-, Absorptions- oder Adsorptionseinheit (40) zu führen, **dadurch gekennzeichnet, dass** die Anlage Mittel zur Ozoneindüsung (30) aufweist, die dafür eingerichtet sind, stromab der Nachbehandlungseinheit (20) und stromauf der Wasch-, Absorptions- oder Adsorptionseinheit (40) Ozon in den Rauchgasstrom (1) einzudüsen.

13. Anlage nach Anspruch 12, die zur Durchführung eines Verfahrens nach einem der Ansprüche 1 bis 11 eingerichtet ist.
